(19) Europäisches Patentamt / European Patent Office / Office européen des brevets

(11) **EP 3 175 284 B1**

(12) **FASCICULE DE BREVET EUROPEEN**

(45) Date de publication et mention de la délivrance du brevet:
**17.07.2024  Bulletin 2024/29**

(21) Numéro de dépôt: **15759871.5**

(22) Date de dépôt: **28.07.2015**

(51) Classification Internationale des Brevets (IPC):
**G02C 7/02** *(2006.01)*        **G02B 1/111** *(2015.01)*

(52) Classification Coopérative des Brevets (CPC):
**G02B 1/111; G02C 7/022**

(86) Numéro de dépôt international:
**PCT/FR2015/052088**

(87) Numéro de publication internationale:
**WO 2016/016574 (04.02.2016 Gazette 2016/05)**

(54) **LENTILLE OPHTALMIQUE COMPORTANT UN REVÊTEMENT MINIMISANT LES REFLETS ULTRAVIOLETS ET PROCÉDÉ DE FABRICATION D'UNE TELLE LENTILLE**

OPHTHALMISCHE LINSE MIT EINER BESCHICHTUNG, DIE ULTRAVIOLETTE REFLEKTIONEN MINIMIERT, UND VERFAHREN ZUR HERSTELLUNG SOLCH EINER LINSE

OPHTHALMIC LENS COMPRISING A COATING MINIMIZING UV REFLECTION AND MANUFACTURING PROCESS THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2014  FR 1457385**

(43) Date de publication de la demande:
**07.06.2017  Bulletin 2017/23**

(73) Titulaire: **Essilor International**
**94220 Charenton-le-Pont (FR)**

(72) Inventeur: **LECLAIRE, Yves**
**F-94227 Charenton Cedex (FR)**

(74) Mandataire: **Santarelli**
**Tour Trinity**
**1 bis Esplanade de la Défense**
**92035 Paris La Défense Cedex (FR)**

(56) Documents cités:
EP-A1- 0 614 957        EP-A1- 1 362 246
US-A1- 2002 024 705     US-A1- 2009 191 391
US-B2- 7 692 855

• ANONYMOUS: "COATING, DIP COATING, FLOW COATING : WHAT'S THE DIFFERENCE ? - FISA", 11 October 2019 (2019-10-11), XP093065309, Retrieved from the Internet <URL:https%3A%2F%2Fwww.fisa.com%2Fcoating-dip-coating-flow-coating-whats-the-difference%2F> [retrieved on 20230719]
• M HAUPT ET AL: "Realization of an Economical Polymer Optical Fiber Demultiplexer", 1 January 2006 (2006-01-01), XP055186482, Retrieved from the Internet <URL:http://arxiv.org/ftp/arxiv/papers/0705/0705.3964.pdf> [retrieved on 20150428]

EP 3 175 284 B1

**Description**

La présente demande concerne une lentille ophtalmique.

Elle concerne plus particulièrement une lentille ophtalmique permettant une protection des yeux par rapport aux rayonnements ultraviolets (UV), et notamment pour protéger les yeux des rayonnements UV (généralement compris dans la gamme 100 nm à 400 nm environ) réfléchis sur une face arrière de lentille.

On connait par exemple une lentille ophtalmique comportant un substrat et un revêtement antireflet déposé sous vide permettant de réduire une quantité de rayonnement ultraviolet réfléchi en face arrière de la lentille. Le revêtement antireflet consiste alors en un empilement de plusieurs couches de matériaux inorganiques de quelques nanomètres d'épaisseur, typiquement entre environ 10 nm et environ 400 nm.

Dans le cas particulier d'un substrat à haut indice, c'est-à-dire avec un indice de réfraction supérieur à environ 1,56, voire 1,6, la différence d'indice entre l'air et le substrat accentue la réflexion des rayonnements ultraviolets (UV) en face arrière du verre, ce qui diminue donc la protection face aux UV. Les indices des lentilles ophtalmiques actuellement commercialisées vont jusqu'à environ 1,74 pour les matériaux polymères et jusqu'à environ 1,9 pour certains verres minéraux.

Ce problème est bien illustré lorsque la protection face aux rayonnements UV est caractérisée au moyen d'un indice dit « e-spf » (pour « eye - sun protection factor ») décrit dans la demande de brevet WO2013092377 qui tient compte à la fois des rayonnements UV transmis à travers la lentille (Tuv), mais aussi des rayonnements UV réfléchis (Ruv) sur la face arrière de la lentille. Il apparait notamment que cet indice dépend essentiellement du Ruv pour les substrats d'indice supérieur ou égal à environ 1,6, puisque ceux-ci sont généralement en matériau qui absorbe les UV en quasi-totalité, conduisant à un Tuv proche de zéro.

Dans la protection des yeux contre les rayonnements UV, seule la transmission (Tuv) est traditionnellement prise en compte dans les équipements ophtalmiques. Lorsque le rayonnement réfléchi (Ruv) est pris en compte, les solutions de protection proposées dépendent de l'utilisation de revêtements antireflets en face arrière du verre ayant un très bas coefficient de réflexion dans l'ultraviolet. Or une telle solution est complexe et coûteuse et n'est pas envisageable pour toutes les lentilles ophtalmiques.

L'objet de la présente invention vise à remédier au moins en partie aux inconvénients précités et à obtenir d'autres avantages.

A cet effet, est proposé, selon un premier aspect tel que défini dans la revendication 1, une lentille ophtalmique comportant un substrat ayant un indice de réfraction donné et un revêtement minimisant les reflets ultraviolets ayant un indice de réfraction donné et étant présent en face arrière dudit substrat, dans laquelle le revêtement minimisant les reflets ultraviolets présente une épaisseur comprise entre environ 1 $\mu$m et environ 200 $\mu$m et dans laquelle l'indice de réfraction du revêtement minimisant les reflets ultraviolets est inférieur à l'indice de réfraction du substrat d'au moins 0,15 unités.

Le terme « substrat » désigne ici un corps de la lentille. Il a une face avant et une face arrière, généralement concave. La face arrière est destinée à être la face la plus proche des yeux d'un porteur de lunettes fabriquées à partir de la lentille.

Le revêtement minimisant les reflets ultraviolets est positionné du côté du substrat destiné à être le plus proche de l'oeil d'un porteur de lunette. C'est-à-dire qu'il est positionné en face dite « arrière » du substrat

Le revêtement minimisant les reflets ultraviolets est formé par un vernis ou un film, également appelé « patch ».

Le revêtement minimisant les reflets ultraviolets selon l'invention a ici une épaisseur très supérieure aux longueurs d'onde du visible, généralement comprises entre environ 380 nm et environ 790 nm, c'est-à-dire une épaisseur égale ou supérieure à environ 1 $\mu$m. L'épaisseur du revêtement minimisant les reflets ultraviolets est comprise entre environ 1 $\mu$m et environ 200 $\mu$m.

Cette épaisseur est par exemple comprise entre environ 60 $\mu$m et environ 200 $\mu$m dans un cas où le revêtement est formé d'un film, par exemple un film en matériau thermoplastique du type déposé sur le substrat par lamination ou collage. Dans un cas où le revêtement est par exemple formé d'un vernis, l'épaisseur est par exemple comprise entre environ 1 $\mu$m et environ 100 $\mu$m, voire entre environ 1 $\mu$m et environ 10 $\mu$m, voire éventuellement entre environ 1 $\mu$m et environ 5 $\mu$m voire encore entre environ 2 $\mu$m et environ 5 $\mu$m.

En introduisant un écart de valeur d'indices entre l'indice du substrat et l'indice du revêtement minimisant les reflets ultraviolets, il est ainsi possible d'améliorer l'e-spf (indice de protection d'une lentille face aux rayonnements UV, mentionné précédemment) de toute lentille ophtalmique.

L'écart de valeur d'indices est d'au moins 0,15 unités, c'est-à-dire par exemple pour un revêtement d'indice (i), le substrat aura un indice d'au moins (i+0,15), ou inversement pour un substrat d'indice (j), le revêtement aura un indice d'au plus (j-0,15).

Les valeurs des indices de réfraction du substrat et du revêtement sont bien entendu mesurées à une même longueur d'onde prédéterminée. Plus précisément et sauf indication contraire, les valeurs des indices de réfraction mentionnées dans le présent mémoire correspondent à des indices dits communément « nD25 ». Le « n » correspond à la valeur de l'indice de réfraction, le « D » correspond à la ligne (ou raie spectrale) D du sodium, tandis que le « 25 » correspond à la température en degrés Celsius. Cela signifie par conséquent que les mesures sont ici réalisées à 25°C avec une lampe à sodium et déterminées au niveau de la ligne D du spectre obtenu, soit à une longueur d'onde égale à environ 589 nm. On notera qu'une valeur d'indice de réfraction déterminée à une longueur d'onde comprise plus généralement entre environ 550 nm et 600 nm pourra être presque identique à la valeur déterminée à 589 nm (à nD25), l'écart résultant étant souvent de 0,01 unités seulement.

Grâce à une telle amélioration de la protection contre les rayons ultraviolets il est possible de promouvoir la gamme de niveau de protection de la lentille pour un substrat considéré.

Cette solution est à l'encontre de l'enseignement de la technique moderne concernant les lentilles ophtalmiques, en particulier. En effet il est généralement admis qu'il est préférable, voire nécessaire, de limiter l'écart, voire faire correspondre, l'indice de réfraction d'un vernis à l'indice de réfraction du substrat sur lequel il est déposé, et ceci dans le but de limiter la présence de franges dites d'interférences, problème amplement décrit dans la demande de brevet européen EP1362246.

A cet effet, l'industrie de l'ophtalmique produit pour les substrats hauts indices des revêtements, anti-rayures ou antichocs, ayant un indice par exemple le plus élevé possible afin de pouvoir les apparier avec lesdits substrats hauts indices.

Conformément à l'invention, revêtir un substrat, par exemple haut indice, avec un revêtement minimisant les reflets ultraviolets, par exemple un vernis bas indice, permet de produire une lentille avec un faible taux de réflexion aux rayonnements UV tout en se dispensant de l'étape de dépôt sous vide habituellement nécessaire pour former un revêtement antireflets réduisant la réflexion des rayonnements UV, ce qui rend la lentille ophtalmique plus simple à réaliser.

Comme mentionné précédemment, dans le calcul de l'e-spf, les deux facteurs à prendre en compte sont le Tuv et le Ruv, comme le montre la formule suivante issue de la demande de brevet WO2013092377 :

$$e - spf \; = \; \frac{1}{R_{UV} + T_{UV}}$$

Le Tuv représente la valeur de la transmission moyenne dans la bande spectrale correspondant aux UV au travers d'un substrat. Cette valeur est nulle pour la plupart des autres matériaux utilisés en ophtalmique d'indice supérieur ou égal à 1,59 car ils coupent la transmission des rayonnements UV.

Le Ruv, quant à lui, représente la valeur de la réflexion moyenne dans la bande spectrale correspondant aux UV à la surface d'une lentille. Si l'épaisseur du revêtement le plus externe est plus importante qu'environ deux à trois fois les longueurs d'ondes UV (qui sont inférieures à 380 nm), alors le Ruv peut être considéré au premier ordre comme fonction de l'indice de ce revêtement. Si le revêtement le plus externe est un revêtement dont l'épaisseur est très inférieure aux longueurs d'onde des UV, par exemple avec une épaisseur d'environ 5 nm à 20 nm, alors ce revêtement n'a généralement pas d'influence sur le Ruv et l'on doit considérer le Ruv fourni par le ou les revêtements immédiatement adjacents. Dans le cas d'un ou plusieurs revêtements ayant des épaisseurs comprises entre 0,05 et 1 fois la longueur d'onde, le Ruv va dépendre entre autre des interférences constructives et destructives produites par la lumière qui rencontre ces revêtements et le matériau présent sous ces revêtements.

Ainsi, lorsque le substrat a un Tuv très faible, moins la face arrière du verre réfléchit les rayonnements UV vers les yeux du porteur, plus le verre assure une bonne protection aux rayonnements UV et plus l'e-spf est haut.

Dans le cadre d'un revêtement minimisant les reflets ultraviolets selon l'invention, par exemple formé par un vernis, le Ruv va croître avec l'indice du matériau le plus extérieur, ce qui implique que les vernis ayant un indice haut supérieur à 1,5, voir 1,56, voir 1,6, combiné traditionnellement respectivement avec les substrats haut indice supérieur à 1,5, voir 1, 56 voir supérieur à 1,6 vont former des lentilles avec de très forts Ruv, et par conséquent, de mauvais e-spf.

Il est à noter que la segmentation commerciale de l'e-spf se fait par tranches, et est décomposée en six classes de la manière suivante :

|  |  |
|---|---|
| e-spf <6,25 : | classe 0 |
| e-spf 6.25-12,5 : | classe 10 |
| e-spf 12,5-20 : | classe 15 |
| e-spf 20-30 : | classe 25 |
| e-spf 30-50 : | classe 35 |
| e-spf >50 : | classe 50 |

Pour comprendre un des effets supplémentaires de l'invention il faut noter qu'un substrat nu d'indice 1,6, qui absorberait quasiment complètement les rayonnements UV a un e-spf de 19, ce qui le positionne dans la classe commerciale 15. De même, un substrat nu en polycarbonate (PC), d'indice 1,59, aurait un e-spf d'environ 19.5, ce qui le positionne aussi en classe 15. Il en est de même pour tous les substrats nus d'indice supérieur à 1,59.

Le tableau ci-dessous présente des exemples d'e-spf pour des substrats nus de différents indices.

| Indice du substrat | e-spf | Classe e-spf | RUV | TUV |
|---|---|---|---|---|
| 1,50 | 10 | 10 | 4,00 | 1,84 |
| 1,55 | 15 | 15 | 4,65 | 1,81 |
| 1,59 | 19,5 | | 5,19 | 0 |
| 1,60 | 19 | | 5,33 | 0 |
| 1,67 | 16 | | 6,30 | 0 |
| 1,74 | 14 | | 7,29 | 0 |

D'un point de vue de la protection face aux UV, il est important pour des verres d'avoir un e-spf de classe supérieure à 25 et préférentiellement supérieure à 30. Ce besoin commercial est plus fort pour les substrats d'indice plus fort : 1,59, 1,6, 1,67 ou 1,74 qui sont de classe e-spf 15 et moins fort pour les substrats d'indice plus faible: 1,5 ou 1,56 auxquels il est généralement adjoint un vernis coupant la transmission des UV ce qui leur confère un indice e-spf compris entre 20 et 25, soit une classe 25.

Le tableau ci-dessous présente un exemple de valeurs mesurées d'e-spf pour une lentille en fonction de valeurs d'indice d'un revêtement minimisant les reflets ultraviolets formé par un vernis et présent comme revêtement le plus extérieur (hormis un éventuel revêtement surfacique de finition, de plus faible épaisseur) sur un substrat d'indice 1,6, ici en polyméthylméthacrylate (PMMA).

| Indice du vernis | e-spf |
|---|---|
| 1,40 | 36 |
| 1,42 | 33 |
| 1,44 | 31 |
| 1,46 | 29 |
| 1,48 | 27 |
| 1,50 | 25 |
| 1,52 | 23 |
| 1,54 | 22 |
| 1,56 | 21 |
| 1,58 | 20 |
| 1,60 | 19 |

Ce tableau permet de montrer que l'utilisation d'un revêtement d'indice inférieur à celui du substrat d'au moins 0,15 améliore l'e-spf (valant par exemple 31 pour un vernis d'indice 1,44), ce qui positionnerait la lentille en classe 35, contre 19 pour un vernis d'indice 1,6, indice le plus proche de celui du substrat ce qui positionnerait la lentille en classe 15.

Un substrat haut indice de valeur 1,60 par exemple, recouvert en face arrière par un revêtement selon l'invention d'indice 1,44 ou inférieur a ainsi un e-spf d'au moins 30, voire 31, ce qui le positionne en classe e-spf 35.

Ainsi le revêtement selon l'invention, formé par exemple par un vernis, appliqué à un substrat, par exemple d'indice 1,59 et encore plus un substrat d'indice 1,6, a l'avantage de pouvoir proposer des verres haut indice de réalisation simple ayant toutefois une protection aux rayonnements UV importante.

| Indice du substrat $n_s$ | e-spf substrat nu | Classe e-spf Substrat | Indice du vernis (environ $n_s$ -0,15) | e-spf substrat verni | Classe e-spf Substrat verni |
|---|---|---|---|---|---|
| 1,55 | 21,5 | 25 | 1,40 | 36 | 35 |

(suite)

| Indice du substrat $n_s$ | e-spf substrat nu | Classe e-spf Substrat | Indice du vernis (environ $n_s$ -0,15) | e-spf substrat verni | Classe e-spf Substrat verni |
|---|---|---|---|---|---|
| 1,59 | 19,5 | 15 | 1,44 | 31 | 35 |
| 1,60 | 19 | 15 | 1,46 | 29 | 25 |
| 1,64 | 17 | 15 | 1,50 | 25 | 25 |
| 1,67 | 16 | 15 | 1,52 | 23 | 25 |
| 1,74 | 14 | 15 | 1,58 | 20 | 25 |

Le tableau ci-dessus permet de montrer de façon générale pour les substrats connus que l'utilisation d'un revêtement d'indice inférieur à celui du substrat d'au moins 0,15 améliore l'e-spf de façon importante, permettant généralement de changer de classe e-spf voire de passer deux classes e-spf. Ainsi pour un vernis d'indice 1,40, sur un substrat d'indice 1,55, l'e-spf est 36 de ce qui positionnerait la lentille en classe 35 au lieu de le classe 25, ou encore 20 pour un vernis d'indice 1,58 sur un substrat d'indice 1,74, ce qui positionnerait la lentille en classe 25 au lieu de classe 15.

Selon un exemple de réalisation intéressant, le substrat est un substrat haut indice. C'est-à-dire par exemple que le substrat a un indice de réfraction supérieur ou égal à environ 1,56, voire préférentiellement supérieur ou égal à environ 1,59, voire préférentiellement supérieur ou égal à 1,6. L'indice de réfraction du substrat est par exemple compris entre environ 1,56 et environ 1,9, voire entre environ 1,59 et environ 1,9, voire entre environ 1,6 et environ 1,9.

Le substrat peut ainsi être de tout type, comme par exemple un substrat classiques de l'ophtalmique ayant un indice de réfraction optique supérieur à 1,6, par exemple un matériau organique thermoplastique ou un thermodurcissant.

Par exemple, le substrat est en polythiouréthane, tel que le MR8® ou le MR7®, ayant respectivement un indice de réfraction de 1,60 et 1,66, distribués par Mitsui Toatsu, ou encore le substrat est en PMMA (Poly-méthyl-méthacrylate) notamment le PMMA ACRYLITE 8N-453® commercialisé par Evonik et ayant un indice de réfraction de 1,60.

Le revêtement minimisant les reflets ultraviolets a un indice de réfraction inférieur ou égal à 1,45, voire environ 1,42. Par exemple, l'indice de réfraction du revêtement minimisant les reflets ultraviolets est compris entre environ 1,30 et 1,45, voire entre environ 1,30 et environ 1,42 ou entre environ 1,35 et, 45, voire encore entre environ 1,35 et environ 1,42. Le revêtement minimisant les reflets ultraviolets est formé par un vernis bas indice, c'est-à-dire ayant un indice inférieur ou égal à 1,45, voire 1,42, voire 1,4. Il est par exemple compris entre 1,30 et 1,45, voire entre 1,35 et 1,45, par exemple environ de 1,4 ou 1,42.

Selon un exemple de réalisation, le revêtement minimisant les reflets ultraviolets est formé par un vernis obtenu à partir d'une composition comportant entre environ 10% et environ 85% en poids de matière sèche d'au moins deux poly-alkoxysilanes différents.

Dans le cadre de la présente demande, et à moins qu'il soit expressément indiqué le contraire, les pourcentages sont considérés comme étant des pourcentages massiques par rapport à la masse totale d'extrait sec de la composition de la préparation initiale.

Selon un exemple particulier, la composition peut comporter un poly-alkoxysilane, ou un hydrolysat dudit poly-alkoxysilane, de formulation :

$$(R1)_{4-x}\text{-Si-}(O\text{-}R_2)_x$$

dans laquelle x est un entier compris entre 2 et 4, chaque R1 est indépendamment choisi parmi (C1-C6)alkyle, aryle et aryl(C1-C6)alkyle, et chaque R2 est indépendamment choisi parmi (C1-C6)alkyle.

Le terme « (C1-C6)alkyle » au sens de la présente invention désigne tout groupement linéaire ou ramifié monovalent de 1 à 6 atomes de carbone. Les (C1-C6)alkyles comprennent notamment les (C1-C4)alkyles tels que méthyle, éthyle, propyle, isopropyle, butyle, isobutyle et ter-butyle.

Le terme « aryle » au sens de la présente invention désigne tout groupement aromatique monovalent de 6 à 18 atomes de carbone, éventuellement substitué par un à 4 groupements, identiques ou différents indépendamment l'un de l'autre, choisis parmi halogène, (C1-C6) alkyle, (C1-C6) alkyloxy. Les aryles comprennent notamment le phényle, tolyle et le naphtyle.

Le terme « aryl(C1-C6)alkyle » au sens de la présente invention désigne tout groupement (C1-C6)alkyle tel que défini ci-dessus substitué par un groupement aryle tel que défini ci-dessus. Les aryl(C1-C6)alkyles comprennent notamment les aryl(C1-C4)alkyles tels que le benzyle et le phényléthyle.

La composition peut aussi comporter au moins un composé organosilane ou hydrolysat de celui-ci, de formule :

$$(R)_n\text{-}(Y)_m\text{-}Si\text{-}(X)_{4\text{-}n\text{-}m}$$

dans lesquels les groupes R, identiques ou différents, sont des groupes organiques monovalents liés au silicium par un atome de carbone et contenant au moins une fonction époxy ; les groupes X, identiques ou différents, sont des groupes hydrolysables ; Y est un groupe organique monovalent lié au silicium par un atome de carbone, n et m étant des entiers tels que n= 1 ou 2 avec n + m = 1 ou 2.

La composition du vernis peut comporter par exemple du TEOS (tetraéthoxysilane, $Si(OC_2H_5)_4$, et/ou la composition peut par exemple comporter au moins un poly-alkoxysilane, comportant au moins un groupement méthyle ($CH_3$-) directement lié à l'atome de silicium (Si), tel que le MTMS (methyltrimethoxysilane, $CH_3Si(OCH_3)_3$) ou le MTES (methyltriethoxysilane, $CH_3Si(OC_2H_5)_3$) ou le DMDES (dimethyldiethoxysilane, $(CH_3)_2Si(OC_2H_5)_2$).

Selon un exemple de réalisation, les poly-alkoxysilanes de la composition du vernis sont choisis parmi un méthyltriméthoxysilane (MTMS), un méthyltriéthoxysilane (MTES), un diméthyldiéthoxysilane (DMDES), un γ-Glycidoxypropyltriméthoxysilane (GLYMO), ou encore un tétraéthoxysilane (TEOS).

En l'absence d'ajouts de colloïdes ou de monomères supplémentaires pouvant modifier l'indice, l'indice des vernis obtenus à partir des compositions utilisant ces silanes est d'environ 1,42.

Le MTMS ou mieux encore, le MTES (méthyltriéthoxysilane) sont les silanes les mieux adaptés, seuls ou associés au TEOS (tétraéthoxysilane), du fait de leur faibles indices. Un avantage est que le mélange comportant du MTMS (ou MTES) et du TEOS, permet, en variant la proportion de TEOS, de faire varier les propriétés de dureté du revêtement minimisant les reflets ultraviolets.

Pour certaines compositions, le revêtement minimisant les reflets ultraviolets formé par un vernis utilisé par l'invention peut être utilisé aussi comme revêtement anti-abrasion. Il peut ainsi être ajouté, dans sa composition, des colloïdes de silice ou de silice creuse pour augmenter la dureté du revêtement et/ou faire baisser l'indice.

De plus, lorsqu'il s'agit d'un vernis, sa composition est préférentiellement choisie en fonction de la nature du substrat. Par exemple, sur un substrat acrylique d'indice 1,6, le vernis est avantageusement à base d'un mélange d'un silane MTES (methyl triethoxysilane) et d'un silane TEOS (tétraéthoxysilane). L'indice d'une telle formulation est ainsi proche de 1,42.

Optionnellement, pour certains substrats, la composition du vernis comporte du DBU (1,8-diazabicyclo [5.4.0] undéc-7-ène), et/ou de l'acide acétique pour favoriser la dureté et l'adhérence.

Pour d'autres substrats haut indice, il est possible d'ajouter d'autres silanes, comportant des groupes fonctionnels autres que le silane, pour améliorer l'adhérence, l'indice final sera voisin de 1,44 en fonction des quantités employées.

Optionnellement, le vernis comporte du GLYMO (γ-Glycidoxypropyltrimethoxysilane) pour promouvoir l'adhésion sur les substrats à base de polyuréthanes cités au-dessus.

Un vernis selon un mode de réalisation de la présente invention comporte par exemple la composition suivante :

- Du MTMS ou MTES, seuls ou associés au TEOS : au moins environ 15%, voire 20% en poids par rapport à la matière sèche ;
- Du GLYMO (γ-Glycidoxypropyltrimethoxysilane) à moins d'environ 25%, par exemple entre environ 5% et environ 25%, voire environ 20%, voire de préférence en quantité inférieure ou égale à 10% en poids par rapport à la matière sèche en fonction de la nature du substrat auquel le vernis est destiné ;
- Un acide capable d'initier l'hydrolyse des monomères ; l'acide peut être un acide carboxylique choisi par exemple parmi l'acide acétique, l'acide propionique, l'acide butyrique, l'acide acrylique et leurs mélanges ; de préférence, l'acide est l'acide acétique ;
- Un catalyseur de condensation choisi notamment parmi les imidazoles, les amidines et les amidines cycliques ou bicycliques.

Des exemples de catalyseur de condensation comprennent le N-méthylimidazole, le diazabicycloundecène et le diazabicyclononène. De préférence, le catalyseur de condensation est le 1,8-diazabicyclo[5.4.0]undéc-7-ène (DBU).

Ces monomères sont préférentiellement dans la forme monomérique citée au-dessus mais peuvent être partiellement ou totalement dans leur forme hydrolysée.

Il est aussi possible d'ajouter de la silice creuse, ce qui permet d'abaisser encore l'indice, et en particulier lorsque l'indice du vernis, sans silice creuse, est supérieur à 1,45.

En effet, l'indice de la silice creuse dépend de la taille moyenne des particules de silice creuse. Plus précisément, l'indice de la silice creuse est inversement proportionnel à un ratio entre le volume de la cavité au coeur de la particule et le volume de la particule de silice. Ce ratio baisse lorsque la taille des particules de silice diminue.

Cependant il est important de noter que pour des particules de silice creuse de diamètre supérieur ou égal à environ 40 nm ou 50 nm, l'introduction de silice creuse en quantité importante (c'est-à-dire supérieure à 40%, respectivement 50%, en poids d'extrait sec de la composition de vernis) peut conduire à former des vernis diffusants.

Ainsi, selon un exemple intéressant de réalisation, le vernis, formant le revêtement minimisant les reflets ultraviolets, est obtenu à partir d'une composition comportant entre environ 5% et environ 50%, en poids de matière sèche, de silice creuse.

Et par exemple, la silice creuse a des particules de diamètre inférieur ou égal à environ 100 nm, par exemple un diamètre compris entre environ 30 nm et environ 60 nm. Ainsi les particules de silice creuse sont de préférence choisies avec un diamètre compris entre environ 40 nm et environ 60 nm, de préférence avec un diamètre moyen proche de 50nm.

De manière additionnelle, le vernis peut aussi être obtenu à partir d'une composition comportant au moins un monomère de fluorosilane, par exemple entre 0% et environ 10% en poids. Le fluorosilane permet d'abaisser l'indice. Un exemple de monomère fluorosilane peut être le (3,3,3-trifluoropropyl)trimethoxysilane.

Ainsi par exemple, l'e-spf d'une lentille, avec un substrat haut indice revêtu de vernis d'indice 1,42, est ainsi par exemple supérieur à 30, alors qu'il ne serait que de 19 pour une lentille comportant un vernis d'indice 1,6.

Selon un exemple intéressant de réalisation, la lentille comporte en outre un revêtement quart d'onde configuré pour limiter des franges d'interférences, également désigné ici couche quart d'onde, dite aussi couche "anti-franges" ou couche interférentielle, voir couche quart d'onde interférentielle. Le revêtement quart d'onde est situé entre le substrat et le revêtement minimisant les reflets ultraviolets.

Une couche quart d'onde permet ainsi de minimiser une éventuelle présence de franges d'interférences pouvant être générées par la différence d'indice entre le substrat et le vernis.

Une telle couche quart d'onde est par exemple décrite dans la demande de brevet EP1362246, inclus par référence. Elle est alors positionnée entre le substrat et le vernis.

Habituellement, ce genre de couche est utilisé, tel qu'illustré dans la demande de brevet EP1362246, dès que l'indice de réfraction du vernis n'est pas exactement accordé à celui du substrat et ce bien que le vernis ait été choisi de façon à avoir un indice ayant le moins de différence possible avec celui du substrat.

Ainsi qu'énoncé dans la demande EP1362246, la couche quart d'onde comprend au moins un oxyde minéral colloïdal généralement choisi parmi $SiO_2$, $TiO_2$, $ZrO_2$, $SnO_2$, $Sb_2O_3$, $Y_2O_3$, $Ta_2O_5$ et leurs mélanges. Les oxydes minéraux colloïdaux préférés sont $SiO_2$, $TiO_2$, $ZrO_2$ et les mélanges $SiO_2/TiO_2$ et $SiO_2/ZrO_2$.

Les silices colloïdales préférées sont les silices préparées par le procédé Stöber. Le procédé Stöber est un procédé simple et bien connu qui consiste en une hydrolyse et condensation du tétra silicate d'éthyle aussi dénommé tétraéthoxysilane ($Si(OC_2H_5)_4$ ou TEOS) dans de l'éthanol catalysé par de l'ammoniac. Le procédé permet d'obtenir une silice directement dans l'éthanol, une population de particules quasi monodispersée, une taille de particules réglable et une surface de particule fonctionnalisée du type ($SiO^-NH4^+$).

Dans le cas où la couche quart d'onde est composée d'un mélange d'oxydes minéraux colloïdaux, de préférence, le mélange comprend au moins un oxyde haut indice, c'est à dire ayant un indice de réfraction supérieur ou égal à environ 1,54 et au moins un oxyde bas indice, c'est à dire ayant un indice de réfraction inférieur à environ 1,54. De préférence, les mélanges d'oxydes minéraux sont des mélanges binaires, en particulier d'un oxyde bas indice et d'un oxyde haut indice. Généralement, le rapport pondéral oxyde bas indice / oxyde haut indice varie d'environ 20/80 à environ 80/20, de préférence d'environ 30/70 à environ 70/30 et mieux d'environ 40/60 à environ 60/40.

La taille des particules d'oxyde minéral varie généralement d'environ 10 nm à environ 80 nm, de préférence d'environ 30 nm à environ 80 nm et mieux d'environ 30 nm à environ 60 nm.

En particulier, l'oxyde minéral peut être constitué d'un mélange de particules de petite taille, c'est à dire d'environ 10 nm à environ 15 nm et de particules de grande taille, c'est à dire d'environ 30 nm à environ 80 nm.

Typiquement, la couche quart d'onde a une épaisseur comprise entre environ 60 nm et environ 100 nm, de préférence entre environ 70 nm et environ 95 nm, et mieux entre environ 80 nm à environ 95 nm, voire encore mieux entre 85 nm et 95 nm. Cette épaisseur doit être aussi proche que possible de l'épaisseur théorique d'une couche quart d'onde (lambda/(4.n) avec lambda une longueur d'onde représentative et n l'indice de la couche quart d'onde), compte tenu des matériaux utilisés pour l'article d'optique, pour atténuer les franges d'interférence.

Ainsi, par exemple, le revêtement quart d'onde est composé de deux types de nanoparticules d'oxydes d'indices différents. Par exemple, un premier des deux types de nanoparticules d'oxydes est de la silice ($SiO_2$) et un deuxième des deux types de nanoparticules d'oxydes est de la zircone ($ZrO_2$), aussi dénommé dioxyde de zirconium.

La zircone peut être remplacée dans certains cas par d'autres oxydes d'indice élevé, par exemple $TiO_2$ ou $Ta_2O_5$.

Ainsi, la couche quart d'onde est par exemple constituée à partir d'un mélange de colloïdes, par exemple de silice ($SiO_2$) et zircone ($ZrO_2$), dispersés par exemple dans de l'éthanol.

La quantité respective des oxydes dépend de l'indice de réfraction du substrat et parfois de l'indice de réfraction du vernis comme ceci est par exemple illustré par le tableau décrit ultérieurement.

Dans un mode de réalisation, la couche quart d'onde est obtenue par dépôt de particules d'oxydes colloïdal, c'est-à-dire sous forme de particules, soit par dépôt à la tournette, soit par dépôt par immersion. Après dépôt et retrait du solvant, il reste sur le substrat une fine couche de particules d'oxydes, comportant une porosité ouverte, l'espace entre les particules.

Dans ce texte, on entend par colloïde, soit une solution comportant des particules nanométriques, ou des nanoparticules, en suspension colloïdale dans un solvant, soit les nanoparticules elles-mêmes en fonction du contexte.

Avantageusement, il n'est utilisé aucun matériau de remplissage antérieurement au dépôt de la couche de vernis. Ainsi, selon un exemple avantageux de réalisation, le vernis forme un matériau de remplissage de la couche quart d'onde entre les nanoparticules d'oxydes. Ceci permet la tenue mécanique de l'ensemble couche quart d'onde/vernis sur le substrat sans dépendre uniquement d'une adhérence entre le substrat et les colloïdes de la couche quart d'onde. L'adhérence étant apportée par le vernis en contact avec le substrat à travers la couche quart d'onde poreuse.

De plus cela peut permettre, au premier ordre, de se dispenser de modifier la composition des particules d'oxyde en fonction de l'indice du vernis. Ainsi, la composition des particules d'oxyde, et par exemple le ratio entre deux types de particules (ici $ZrO_2$ et $SiO_2$ de préférence), peut être choisi uniquement en fonction de l'indice du substrat, et ne changera pas que l'indice du vernis choisi soit de 1,42, 1,44 ou même 1,40.

De façon usuelle, pour un substrat d'indice donné, la couche quart d'onde est choisie en fonction du vernis choisi. Plus précisément, entre deux vernis d'indices différents, si le vernis d'indice le plus faible est choisi, la couche quart d'onde choisie doit présenter un indice plus faible que celui de la couche quart d'onde qui aurait été choisie si le vernis d'indice le plus élevé avait été choisi.

Cependant, lorsque la couche quart d'onde est faite par dépôt en phase liquide de particules colloïdales et que le matériau du vernis sert de matériau de remplissage, il n'est pas nécessaire, au premier ordre, de modifier la composition en colloïdes. En effet, le matériau du vernis s'intègre entre les particules du colloïde. Alors, l'indice de la couche quart d'onde dépend de l'indice des colloïdes, de leur proportion relative, de l'indice et de la proportion du matériau du vernis inséré entre les particules.

Ainsi, si le vernis d'indice plus bas est choisi au lieu d'un vernis d'indice plus haut, avec une différence D entre leurs indices qui est au plus égale à environ 0,05 unités, l'indice de la couche quart d'onde choisie est plus faible d'une grandeur D' environ égale à 0,4*D à 0,5*D par rapport à l'indice de la couche quart d'onde qui aurait été choisie si le vernis d'indice plus haut avait été choisi. Cette faible différence permet, au premier ordre, de n'avoir à choisir l'indice de la couche quart d'onde que par rapport à l'indice du substrat afin que la couche quart d'onde puisse remplir au premier ordre sa fonction.

Enfin, selon un exemple de réalisation, la lentille comporte en outre au moins un revêtement de finition, également nommé revêtement surfacique de finition, celui-ci pouvant être choisi par exemple parmi un revêtement antistatique, un revêtement antisalissure, un revêtement antibuée notamment. Et de préférence, le revêtement de finition est appliqué directement sur le revêtement minimisant les reflets ultraviolets.

Est également proposé, comme défini à la revendication 11, un procédé de fabrication d'une lentille ophtalmique comportant une étape de fourniture d'un substrat ayant un indice de réfraction donné et une étape de dépôt d'un revêtement minimisant les reflets ultraviolets ayant un indice de réfraction donné sur une face arrière du substrat, dans lequel l'étape de dépôt du revêtement minimisant les reflets ultraviolets est configurée pour que le revêtement minimisant les reflets ultraviolets présente une épaisseur comprise entre environ 1 μm et environ 200 μm, et présente un indice de réfraction inférieur à l'indice de réfraction du substrat d'au moins 0,15 unités.

En "face arrière du substrat" signifie dans l'invention que le revêtement minimisant les reflets ultraviolets est présent sur une face de la lentille destinée à être positionnée en regard d'un oeil d'un porteur de lunettes munie de la dite lentille,

Le revêtement minimisant les reflets ultraviolets est un vernis déposé par « spin coating » (c'est-à-dire dépôt à la tournette), ou « spray » (soit pulvérisation), ou impression par jet de matière (« ink-jet » en anglais) ou encore « dip-coating » (c'est-à-dire dépôt par immersion).

De plus le vernis est par exemple possiblement déposé en une seule couche.

Selon un exemple de réalisation, le procédé de fabrication d'une lentille comporte une étape de dépôt d'un revêtement quart d'onde préalablement à l'étape de dépôt du revêtement minimisant les reflets ultraviolets.

Dans un exemple particulier, la couche quart d'onde a une épaisseur comprise entre environ 60 nm et environ 100 nm, de préférence entre environ 70 nm et environ 95 nm, et mieux entre environ 80 nm à environ 95 nm, voire encore mieux entre 85 nm et 95 nm et est déposée sur le substrat par dip-coating, c'est-à-dire par immersion, préalablement au dépôt du revêtement minimisant les reflets ultraviolets.

Le dépôt par dip-coating, c'est-à-dire par immersion, est par exemple réalisé avec une vitesse très lente, c'est-à-dire de préférence à une vitesse égale ou inférieure à environ 2 mm/s, par exemple comprise entre environ 0,5 mm/s et environ 2 mm/s, voire entre environ 0,5 mm/s et environ 1,2 mm/s. Cette vitesse concerne l'extraction de la lentille hors de la solution dans laquelle elle est immergée. Du fait de la composition des solutions colloïdales utilisées pour faire le dépôt de la couche de particules d'oxydes, il est possible de limiter, voire de se dispenser d'une étape de séchage, c'est-à-dire une étape pendant laquelle un solvant est évaporé par chauffage. En effet, lors du dépôt par immersion, en particulier lors de l'étape de retrait à vitesse lente, une majorité du solvant s'élimine de la couche, par exemple par évaporation.

Ainsi, le procédé comporte par exemple une étape de dépôt du revêtement quart d'onde par dip-coating, c'est-à-dire immersion, suivie d'une étape d'évaporation d'un solvant contenu dans la solution du revêtement quart d'onde, puis une étape de dépôt du revêtement minimisant les reflets ultraviolets, par exemple par dépôt d'un vernis.

Selon un exemple de réalisation intéressant, l'étape de dépôt du revêtement quart d'onde comporte un dépôt d'une composition colloïdale de nanoparticules d'oxyde, par exemple par immersion comme décrit ci-dessus.

Et par exemple, l'étape de dépôt du revêtement minimisant les reflets ultraviolets comporte un dépôt d'au moins une couche d'un vernis formant un matériau de remplissage entre les nanoparticules d'oxyde du revêtement quart d'onde.

Par exemple, le procédé comporte une étape d'immersion du substrat dans une solution colloïdale, comportant des nanoparticules d'oxyde dans un solvant, puis une étape d'évaporation du solvant.

Les nanoparticules sont alors déposées sur le substrat, en face arrière, par exemple par dépôt à la tournette, et forment ainsi une couche ayant une porosité ouverte, comme ceci avait été énoncé précédemment.

Le procédé comporte ensuite par exemple l'étape de dépôt du vernis sur la couche quart d'onde, et le vernis forme alors le matériau de remplissage entre les nanoparticules présentes sur le substrat.

Ainsi, le vernis adhère au substrat à travers la couche quart d'onde, poreuse.

Enfin, selon un exemple de réalisation, le procédé de fabrication de la lentille comporte une étape de dépôt d'un revêtement de finition directement sur le revêtement minimisant les reflets ultraviolets.

D'autres caractéristiques et avantages de la présente invention ressortiront mieux à la lecture de la description donnée en référence aux dessins annexés, donnés à titre indicatif et nullement limitatif, dans lesquels :

- la figure 1 présente une lentille ophtalmique selon un exemple de réalisation de la présente invention, et
- la figure 2 montre un organigramme schématisant un procédé de fabrication d'une lentille ophtalmique selon un exemple de réalisation de la présente invention.

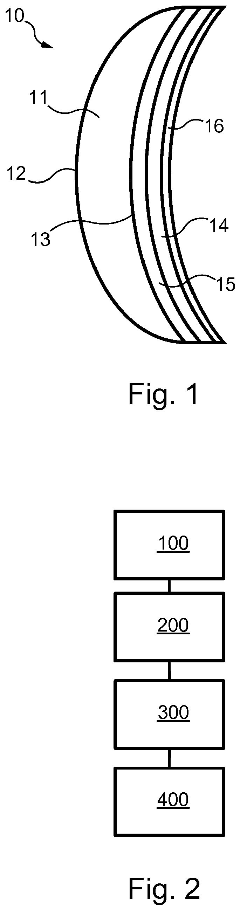

La figure 1 présente une lentille ophtalmique 10 selon un exemple de réalisation de la présente invention.

La lentille ophtalmique 10 comporte un substrat 11, formant un corps de la lentille.

Le substrat 11 comporte une face avant 12 et une face arrière 13, opposée à la face avant 12.

En face arrière 13, la lentille ophtalmique 10 comporte un revêtement minimisant les reflets ultraviolets formé ici par une couche de vernis 14.

Ici, une couche quart d'onde 15 est également présente entre la face arrière 13 du substrat 11 et le vernis 14 comme le montre la figure 1. La couche quart d'onde 15 permet notamment de minimiser d'éventuelles franges d'interférences qui seraient, le cas échéant, esthétiquement rédhibitoires.

La lentille ophtalmique comporte en outre ici un revêtement surfacique de finition 16, optionnel, déposé sur la couche de vernis 14. Ce revêtement peut être un revêtement antistatique, un revêtement hydrophobe, ou extra hydrophobe, dit aussi revêtement anti-salissure, ou un revêtement antibuée par exemple.

Autrement dit, hormis le revêtement de finition éventuellement présent, la couche de vernis est le revêtement le plus extérieur de la lentille ophtalmique, c'est-à-dire celui se trouvant alors en surface.

Selon un premier exemple de réalisation de la présente invention, le matériau de la couche de vernis est obtenu à partir d'une composition comportant un mélange d'un hydrolysat de 267,8 g de MTES et de 38,8 g de TEOS qui sont hydrolysés par 94,6 g d'$H_2O$ et 20 g d'acide acétique. Lors de l'hydrolyse, la température monte jusqu'à 46,1°C. Le lendemain, environ 2 g de DBU y sont ajoutés en tant que catalyseur de condensation, ainsi que 15 g d'acide acétique et 0,6 g d'un tensio-actif. Le vernis ainsi obtenu présente alors un indice environ égal à 1,42 et est le vernis d'indice 1,42 utilisé dans les exemples ci-après.

Autrement dit, le vernis obtenu est le résultat de la polymérisation des éléments précités.

Selon un deuxième exemple de réalisation de la présente invention, le vernis est obtenu à partir d'un mélange de 178,1 g de MTES (soit 65% en masse de l'extrait sec du vernis), de 70,2 g de TEOS (15% de l'extrait sec du vernis), et de 38,2 g de GLYMO (γ-Glycidoxypropyltrimethoxysilane) (20% de l'extrait sec du vernis). Le MTES, le TEOS et le GLYMO sont hydrolysés par 103,7 g d'$H_2O$ et 20 g d'acide acétique. Lors de l'hydrolyse, la température monte jusqu'à 40°C environ. Le lendemain environ 2 g de DBU y sont ajoutés en tant que catalyseur de condensation, ainsi que 32,5 g d'isopropanol et 0,6 g d'un tensio-actif. Le vernis ainsi obtenu présente alors un indice environ égal à 1,44 qui est le vernis d'indice 1,44 utilisé dans les exemples ci-après.

Dans les exemples présentés, lorsqu'il est mentionné de la silice creuse, il s'agit ici de la silice "THRULYA 1110" fournie par JGC, ayant un diamètre de particules moyen d'environ 30 nm, un indice optique proche 1,35 et une densité d'environ 1,2.

Selon un troisième exemple de réalisation de la présente invention, un vernis selon le premier exemple de réalisation comporte en outre environ 25% en poids de matière sèche de silice creuse de dimension moyenne proche de 30 nm. Le vernis ainsi obtenu présente alors un indice environ égal à 1,4.

Selon un quatrième exemple de réalisation de la présente invention, un vernis selon le deuxième exemple de réalisation comporte en outre environ 25% en poids de matière sèche de silice creuse de dimension moyenne proche de 30 nm. Le vernis ainsi obtenu présente alors un indice environ égal à 1,42.

Selon un cinquième et un sixième exemple de réalisation de la présente invention, de la silice creuse de dimension moyenne inférieure à 30 nm est utilisée pour remplacer au moins une partie de la silice présente dans le vernis commercial d'indice 1,47 formé par exemple, selon le document EP0614957, de la manière suivante: 80,5 parties d'acide chlorhydrique 0,1N sont ajoutés goutte à goutte dans une solution contenant 224 parties de GLYMO (d'indice 1,51) et 120 parties de DMDES (d'indice 1,4, équivalant à environ 20% en poids de la matière sèche avant réaction et environ 13% en poids de la matière sèche après condensation du vernis). La solution hydrolysée est agitée vingt-quatre heures à température ambiante, soit environ 25°C, puis 718 parties de silice colloïdale à 30 % dans du méthanol sont ajoutés (c'est-à-dire des nanoparticules d'indice 1,45 environ), ainsi que 15 parties d'acétylacétonate d'aluminium et 44 parties d'éthylcellosolve. Une petite quantité d'agent tensio-actif est ensuite ajoutée. Le poids en extrait sec théorique (EST) de la composition est alors de l'ordre de 35 %.

Ainsi, selon le cinquième exemple, dans la composition, 58% en poids de la silice colloïdale présente dans la suspension colloïdale sont remplacés par de la silice creuse de façon à ce que les nanoparticules de silice creuse représentent 25% du poids de matière sèche, et la silice colloïdale représente 18% du poids de la matière sèche. Le vernis obtenu a ainsi un indice d'environ 1,44.

Selon le sixième exemple, dans la composition, 85% de la silice colloïdale présente dans la suspension colloïdale est remplacée par de la silice creuse de façon à ce que les nanoparticules de silice creuse représentent 36,5% du poids de matière sèche. Le vernis obtenu a ainsi un indice d'environ 1,43.

Comme l'illustre la figure 2, une lentille ophtalmique selon un exemple de réalisation de la présente invention est possiblement réalisée de la manière suivante.

Une première étape 100 consiste par exemple ici à choisir un substrat 11 ayant un indice de réfraction supérieur ou égal à 1,6 et tel que le substrat présente au moins une face arrière 13 nue, voire une face avant 12 et une face arrière 13 nues.

Une deuxième étape 200, optionnelle, consiste par exemple en une étape de dépôt d'une couche quart d'onde. L'étape de dépôt de la couche quart d'onde est par exemple réalisée avec une vitesse très lente, c'est-à-dire comprise entre environ 0,5 mm/s et environ 2 mm/s, et avec une épaisseur comprise entre environ 60 nm et environ 100 nm, de préférence entre environ 70 nm et environ 95 nm, et mieux entre environ 80 nm à environ 95 nm, voire encore mieux entre 85 nm et 95 nm. Cette deuxième étape 200 comporte possiblement une étape d'évaporation d'un solvant présent dans la solution de préparation de la couche quart d'onde, laissant ensuite les nanoparticules sur la surface arrière du substrat.

Une troisième étape consiste à conférer à la lentille des propriétés anti-UV. Pour cela, la troisième étape 300 comporte ici une étape de dépôt sur la face arrière 13 du substrat 11 d'une couche d'un vernis 14 ayant un indice de réfraction inférieur ou égal à 1,45. De préférence, le vernis est appliqué de sorte à avoir une épaisseur supérieure ou égale à 1 $\mu$m, de préférence une épaisseur comprise entre environ 1 $\mu$m et environ 5 $\mu$m. Ceci est par exemple réalisé par « spin coating », ou « spray », ou « ink-jet » ou « dip-coating ». Le vernis sert alors éventuellement de matériau de remplissage à la couche quart d'onde poreuse, formée par exemple par les nanoparticules déposées à la surface du substrat. La couche de vernis 14 ayant une épaisseur d'au moins 1 $\mu$m est possiblement appliquée en une seule couche, mais peut également être réalisée en plusieurs couches.

Enfin, une quatrième étape 400, optionnelle, consiste à appliquer un revêtement de finition (aussi appelée « top-coat ») sur le vernis.

A titre illustratif, le tableau ci-dessous présente des exemples d'indices et épaisseurs de la couche quart d'onde, en fonction d'exemples de taux de silice et zircone calculés approximativement, à déposer sur le substrat en fonction de son indice et de l'indice du vernis (qui est celui présenté selon le premier exemple de réalisation pour le vernis d'indice 1,42 et selon le deuxième exemple de réalisation pour le vernis d'indice 1,44).

| Substrat | Vernis | Couche quart d'onde | | | | e-spf |
|---|---|---|---|---|---|---|
| Indice | Indice | Indice | Epaisseur (nm) | Taux colloïde | | |
| | | | | $SiO_2$ | $ZrO_2$ | |
| 1,60 | 1,42 | 1,5073 | 91,22 | 53% | 47% | 33 |
| 1,67 | 1,42 | 1,5399 | 89,29 | 39% | 61% | 33 |
| 1,74 | 1,42 | 1,5719 | 87,47 | 28% | 72% | 33 |
| 1,60 | 1,44 | 1,5179 | 90,59 | 53% | 47% | 31 |
| 1,67 | 1,44 | 1,5507 | 88,67 | 39% | 61% | 31 |

(suite)

| Substrat | Vernis | Couche quart d'onde | | | | | e-spf |
|---|---|---|---|---|---|---|---|
| | | | | | Taux colloïde | | |
| Indice | Indice | Indice | Epaisseur (nm) | | SiO$_2$ | ZrO$_2$ | |
| 1,74 | 1,44 | 1,5829 | 86,87 | | 28% | 72% | 31 |

En particulier dans cet exemple, le substrat d'indice 1,6 est en PMMA, et les substrats d'indices 1,6 ou 1,67 sont des polythiouréthanes et le substrat d'indice 1,74 est un épisulfide.

Ainsi, pour un substrat donné, lorsque le matériau de remplissage de la couche quart d'onde est le vernis, le ratio colloïdal de la couche quart d'onde est pratiquement indépendant de l'indice du vernis à déposer.

Par contre, on constate que le taux de silice et de zircone influence l'indice de la couche quart d'onde ; en effet celui-ci varie de 1,5073 à 1,5829 en diminuant le taux de silice de 53% à 28% et en augment le taux de zircone de 47% à 72%.

Ainsi, par exemple ici, pour un taux de silice compris entre environ 25% et environ 55% et un taux de zircone compris entre environ 45% et environ 75%, l'indice de la couche quart d'onde est globalement compris entre environ 1,50 et environ 1,59. Toutefois, les taux respectifs dépendent essentiellement de l'indice de la couche quart d'onde visé.

On rappelle que les valeurs des indices de réfraction du substrat et du revêtement mentionnées ci-dessus sont mesurées à une même longueur d'onde prédéterminée. Plus précisément ces valeurs correspondent à des indices nD25 ; c'est-à-dire que les mesures sont réalisées à 25°C avec une lampe à sodium et déterminées au niveau de la ligne D du spectre obtenu, soit à une longueur d'onde égale à environ 589 nm.

Il est à noter qu'une différence d'au moins 0,15 unités entre les valeurs de deux indices de réfraction mesurées selon la méthode nD25 devrait correspondre une différence d'au moins 0,1 unités et plus généralement d'au moins 0,12 unités selon une autre méthode de mesure, où les valeurs d'indices seraient obtenues à une longueur d'onde comprise entre environ 300 nm et 350 nm, soit approximativement dans la plage des rayons ultraviolets dits UV-B. La méthode dite UV-B donnerait par conséquent des résultats pas identiques à la méthode nD25, mais assez proches et quantifiés à environ 0,04 unités d'écart.

## Revendications

1. Lentille ophtalmique (10) comportant un substrat (11) ayant un indice de réfraction donné et un revêtement minimisant les reflets ultraviolets (14) ayant un indice de réfraction donné et étant présent en face arrière (13) dudit substrat (11), le revêtement minimisant les reflets ultraviolets (14) étant formé par un vernis et étant le revêtement le plus extérieur de la lentille ophtalmique (10) hormis un revêtement de finition éventuellement présent, lentille ophtalmique (10) dans laquelle le revêtement minimisant les reflets ultraviolets (14) présente une épaisseur comprise entre environ 1 μm et environ 200 μm et dans laquelle l'indice de réfraction du revêtement minimisant les reflets ultraviolets (14) est inférieur ou égal à 1,45 et est inférieur à l'indice de réfraction du substrat (11) d'au moins 0,15 unités, les indices de réfraction du substrat (11) et du revêtement sont les indices nD25, mesurés à 25°C avec la raie spectrale D d'une lampe à sodium.

2. Lentille ophtalmique selon la revendication 1, pour laquelle le substrat (11) a un indice de réfraction supérieur ou égal à 1,56, préférentiellement supérieur ou égal à 1,59, préférentiellement supérieur ou égal à 1,6.

3. Lentille selon l'une quelconque des revendications 1 ou 2, pour laquelle le revêtement minimisant les reflets ultraviolets (14) est formé par un vernis obtenu à partir d'une composition comportant entre environ 10% et environ 85% en poids de matière sèche d'au moins deux poly-alkoxysilanes différents.

4. Lentille selon la revendication 3, pour laquelle les poly-alkoxysilanes sont choisis parmi un méthyltriméthoxysilane (MTMS), un méthyltriéthoxysilane (MTES), un diméthyldiéthoxysilane (DMDES), un γ-Glycidoxypropyltriméthoxysilane (GLYMO), ou un tétraéthoxysilane (TEOS).

5. Lentille selon l'une quelconque des revendications 3 ou 4, pour laquelle le vernis est obtenu à partir d'une composition comportant entre environ 5% et environ 50% en poids de matière sèche de silice creuse, et la silice creuse a des particules de diamètre inférieur ou égal à environ 100 nm.

**6.** Lentille selon l'une quelconque des revendications 3 à 5, pour laquelle le vernis est obtenu à partir d'une composition comportant au moins un monomère de fluorosilane.

**7.** Lentille selon l'une quelconque des revendications 1 à 6, comportant un revêtement quart d'onde (15) configuré pour limiter des franges d'interférences, le revêtement quart d'onde étant situé entre le substrat (11) et le revêtement minimisant les reflets ultraviolets (14).

**8.** Lentille selon la revendication 7, pour laquelle le revêtement quart d'onde (15) est composé de deux types de nanoparticules d'oxyde d'indices différents.

**9.** Lentille selon la revendication 8, pour laquelle un premier des deux types de nanoparticules d'oxyde est de la silice (SiO$_2$) et un deuxième des deux types de nanoparticules d'oxyde est de la zircone (ZrO$_2$), et le vernis forme un matériau de remplissage de la couche quart d'onde entre les nanoparticules d'oxydes.

**10.** Lentille selon l'une quelconque des revendications 1 à 9, comportant un revêtement de finition (16) appliqué directement sur le revêtement minimisant les reflets ultraviolets (14).

**11.** Procédé de fabrication d'une lentille ophtalmique (10) comportant une étape de fourniture (100) d'un substrat (11) ayant un indice de réfraction donné et une étape (300) de dépôt d'un revêtement minimisant les reflets ultraviolets (14) ayant un indice de réfraction donné sur une face arrière (13) du substrat (11), le revêtement minimisant les reflets ultraviolets (14) étant formé par un vernis et étant le revêtement le plus extérieur de la lentille ophtalmique (10) hormis un revêtement de finition éventuellement présent, dans lequel l'étape (300) de dépôt du revêtement minimisant les reflets ultraviolets (14) est configurée pour que le revêtement minimisant les reflets ultraviolets (14) présente une épaisseur comprise entre environ 1 μm et environ 200 μm et présente un indice de réfraction inférieur ou égal à 1,45 et inférieur à l'indice de réfraction sur substrat (11) d'au moins 0,15 unités, les indices de réfraction du substrat (11) et du revêtement sont les indices nD25, mesurés à 25°C avec la raie spectrale D d'une lampe à sodium.

**12.** Procédé selon la revendication 11, comportant une étape (200) de dépôt d'un revêtement quart d'onde (15) préalablement à l'étape de dépôt (300) du revêtement minimisant les reflets ultraviolets (14).

**13.** Procédé selon la revendication 12, pour lequel l'étape (200) de dépôt du revêtement quart d'onde (15) comporte un dépôt d'une composition colloïdale de nanoparticules d'oxyde et l'étape de dépôt du revêtement minimisant les reflets ultraviolets (14) comporte un dépôt d'au moins une couche d'un vernis formant un matériau de remplissage entre les nanoparticules d'oxyde du revêtement quart d'onde.

**14.** Procédé selon l'une quelconque des revendications 11 à 13, comportant une étape (400) de dépôt d'un revêtement de finition (16) directement sur le revêtement minimisant les reflets ultraviolets (14).

**Patentansprüche**

**1.** Augenlinse (10), die ein Substrat (11) mit einem gegebenen Brechungsindex und eine Beschichtung (14) aufweist, welche die UV-Reflexion so gering wie möglich hält und einen gegebenen Brechungsindex hat, wobei sie sich auf der Rückseite (13) des Substrats (11) befindet, wobei die Beschichtung (14), welche die UV-Reflexion so gering wie möglich hält, aus einem Lack gebildet ist und die am weitesten außen gelegene Beschichtung der Augenlinse (10) mit Ausnahme einer möglicherweise vorhandenen Veredelungsbeschichtung darstellt, wobei die Beschichtung (14), welche die UV-Reflexion so gering wie möglich hält, der Augenlinse (10) eine Dicke im Bereich von ungefähr 1 μm bis ungefähr 200 μm aufweist und wobei der Brechungsindex der Beschichtung (14), welche die UV-Reflexion so gering wie möglich hält, höchstens 1,45 beträgt und um mindestens 0,15 Einheiten niedriger als der Brechungsindex des Substrats (11) ist, wobei die Brechungsindizes des Substrats (11) und der Beschichtung den Indizes nD25 entsprechen, wie sie bei 25 °C mit der D-Linie einer Natriumdampflampe gemessen wurden.

**2.** Augenlinse nach Anspruch 1, wobei das Substrat (11) einen Brechungsindex von mindestens 1,56, vorzugsweise von mindestens 1,59, vorzugsweise von mindestens 1,6 hat.

**3.** Linse nach einem beliebigen der Ansprüche 1 oder 2, wobei die Beschichtung (14), welche die UV-Reflexion so gering wie möglich hält, aus einem Lack gebildet ist, der ausgehend von einer Zusammensetzung erhalten wird, welche zwischen ungefähr 10% und ungefähr 85% nach Trockengewicht an mindestens zwei verschiedenen Polyalkoxysilanen aufweist.

4. Linse nach Anspruch 3, wobei die Polyalkoxysilane aus einem Methyltrimethoxysilan (MTMS), einem Methyltriethoxysilan (MTES), einem Dimethyldiethoxysilan (DMDES), einem $\gamma$-Glycidoxypropyltrimethoxysilan (GLYMO) oder einem Tetraethoxysilan (TEOS) ausgewählt sind.

5. Linse nach einem beliebigen der Ansprüche 3 oder 4, wobei der Lack ausgehend von einer Zusammensetzung erhalten wurde, die zwischen ungefähr 5% und ungefähr 50% nach Trockengewicht an Siliciumdioxid-Hohlkörpern aufweist, wobei die Siliciumdioxid-Hohlkörper Partikel mit einem Durchmesser von höchstens ungefähr 100 nm aufweisen.

6. Linse nach einem beliebigen der Ansprüche 3 bis 5, wobei der Lack ausgehend von einer Zusammensetzung erhalten wird, die mindestens ein Fluorsilanmonomer aufweist.

7. Linse nach einem beliebigen der Ansprüche 1 bis 6, wobei sie eine Viertelwellenbeschichtung (15) aufweist, die dafür ausgelegt ist, Interferenzbereiche zu beschränken, wobei sich die Viertelwellenbeschichtung zwischen dem Substrat (11) und der Beschichtung (14) befindet, welche die UV-Reflexion so gering wie möglich hält.

8. Linse nach Anspruch 7, wobei die Viertelwellenbeschichtung (15) sich aus zwei Arten von Oxidnanopartikeln mit unterschiedlichen Indizes zusammensetzt.

9. Linse nach Anspruch 8, wie es sich bei einer ersten der beiden Arten von Oxidnanopartikeln um Siliciumdioxid ($SiO_2$) und bei einer zweiten der beiden Arten von Oxidnanopartikeln um Zirkoniumdioxid ($ZrO_2$) handelt und der Lack ein Füllmaterial der Viertelwellenschicht zwischen den Oxidnanopartikeln bildet.

10. Linse nach einem beliebigen der Ansprüche 1 bis 9, wobei sie eine Veredelungsbeschichtung (16) aufweist, die unmittelbar auf die Schicht (14) aufgebracht wird, welche die UV-Reflexion so gering wie möglich hält.

11. Verfahren zur Herstellung eine Augenlinse (10), wobei es einen Schritt des Bereitstellens (100) eines Substrats (11) mit einem gegebenen Brechungsindex und einen Schritt (300) des Abscheidens einer Beschichtung (14), welche die UV-Reflexion so gering wie möglich hält, mit einem gegebenen Brechungsindex auf einer Rückseite (13) des Substrats (11) aufweist, wobei die Beschichtung (14), welche die UV-Reflexion so gering wie möglich hält, aus einem Lack gebildet ist und die am weitesten außen gelegene Beschichtung der Augenlinse (10) mit Ausnahme einer möglicherweise vorhandenen Veredelungsbeschichtung darstellt, wobei der Schritt (300) des Abscheidens der Beschichtung (14), welche die UV-Reflexion so gering wie möglich hält, derart ausgelegt ist, dass die Beschichtung (14), welche die UV-Reflexion so gering wie möglich hält, eine Dicke im Bereich von ungefähr 1 $\mu$m bis ungefähr 200 $\mu$m aufweist und einen Brechungsindex aufweist, der höchstens 1,45 beträgt und um mindestens 0,15 Einheiten niedriger als der Brechungsindex des Substrats (11) ist, wobei die Brechungsindizes des Substrats (11) und der Beschichtung den Indizes nD25 entsprechen, wie sie bei 25 °C mit der D-Linie einer Natriumdampflampe gemessen wurden.

12. Verfahren nach dem Anspruch 11, wobei es im Vorfeld des Schrittes (300) des Abscheidens der Beschichtung (14), welche die UV-Reflexion so gering wie möglich hält, einen Schritt (200) des Abscheidens einer Viertelwellenbeschichtung (15) umfasst.

13. Verfahren nach Anspruch 12, wobei der Schritt (200) des Abscheidens der Viertelwellenbeschichtung (15) ein Abscheiden einer kolloidalen Zusammensetzung von Oxidnanopartikeln aufweist und der Schritt des Abscheidens der Beschichtung (14), welche die UV-Reflexion so gering wie möglich hält, ein Abscheiden mindestens einer Schicht eines Lacks aufweist, welcher ein Füllmaterial zwischen den Oxidnanopartikeln der Viertelwellenbeschichtung bildet.

14. Verfahren nach einem beliebigen der Ansprüche 11 bis 13, wobei es einen Schritt (400) des Abscheidens einer Veredelungsbeschichtung (16) unmittelbar auf der Beschichtung (14) aufweist, welche die UV-Reflexion so gering wie möglich hält.

**Claims**

1. Ophthalmic lens (10) comprising a substrate (11) having a given refractive index and a coating that minimizes ultraviolet reflections (14) having a given refractive index and being present on the rear face (13) of said substrate (11), the coating that minimizes ultraviolet reflections (14) being formed by a lacquer and being the outermost coating of the ophthalmic lens (10) apart from a top coat optionally present, in which ophthalmic lens (10) the coating that minimizes ultraviolet reflections (14) has a thickness between around 1 $\mu$m and around 200 $\mu$m and wherein the refractive index of the coating that minimizes ultraviolet reflections (14) is less than or equal to 1.45 and is at least 0.15 units lower than the refractive index of the substrate (11), the refractive indices of the substrate (11) and of the coating are nD25 indices, measured at 25°C with the spectral line D of a sodium lamp.

2. Ophthalmic lens according to Claim 1, wherein the substrate (11) has a refractive index greater than or equal to 1.56, preferentially greater than or equal to 1.59, preferentially greater than or equal to 1.6.

3. Lens according to either one of Claims 1 and 2, wherein the coating that minimizes ultraviolet reflections (14) is formed by a lacquer obtained from a composition comprising between around 10% and around 85% by weight of solids of at least two different polyalkoxysilanes.

4. Lens according to Claim 3, wherein the polyalkoxysilanes are selected from a methyltrimethoxysilane (MTMS), a methyltriethoxysilane (MTES), a dimethyldiethoxysilane (DMDES), a γ-glycidoxypropyltrimethoxysilane (GLYMO), or a tetraethoxysilane (TEOS).

5. Lens according to either one of Claims 3 and 4, wherein the lacquer is obtained from a composition comprising between around 5% and around 50% by weight of solids of hollow silica, and the hollow silica has particles with a diameter less than or equal to around 100 nm.

6. Lens according to any one of Claims 3 to 5, wherein the lacquer is obtained from a composition comprising at least one fluorosilane monomer.

7. Lens according to any one of claims 1 to 6, comprising a quarter-wave coating (15) configured to limit interference fringes, the quarter-wave coating being located between the substrate (11) and the coating that minimizes ultraviolet reflections (14).

8. Lens according to Claim 7, wherein the quarter-wave coating (15) is composed of two types of oxide nanoparticles having different indices.

9. Lens according to Claim 8, wherein a first of the two types of oxide nanoparticles is silica ($SiO_2$) and a second of the two types of oxide nanoparticles is zirconia ($ZrO_2$), and the lacquer forms a fill material of the quarter-wave layer between the oxide nanoparticles.

10. Lens according to any one of Claims 1 to 9, comprising a top coat (16) applied directly on the coating that minimizes ultraviolet reflections (14).

11. Process for manufacturing an ophthalmic lens (10) comprising a step (100) of providing a substrate (11) having a given refractive index and a step (300) of depositing a coating that minimizes ultraviolet reflections (14) having a given refractive index on a rear face (13) of the substrate (11), the coating that minimizes ultraviolet reflections (14) being formed by a lacquer and being the outermost coating of the ophthalmic lens (10) apart from a top coat optionally present, wherein the step (300) of depositing the coating that minimizes ultraviolet reflections (14) is configured so that the coating that minimizes ultraviolet reflections (14) has a thickness between around 1 $\mu$m and around 200 $\mu$m and has a refractive index of less than or equal to 1.45 and at least 0.15 units lower than the refractive index of the substrate (11), the refractive indices of the substrate (11) and of the coating are nD25 indices, measured at 25°C with the spectral line D of a sodium lamp.

12. Process according to Claim 11, comprising a step (200) of depositing a quarter-wave coating (15) prior to the step (300) of depositing the coating that minimizes ultraviolet reflections (14).

13. Process according to Claim 12, wherein the step (200) of depositing the quarter-wave coating (15) comprises a deposition of a colloidal composition of oxide nanoparticles and the step of depositing the coating that minimizes ultraviolet reflections (14) comprises a deposition of at least one layer of a lacquer forming a fill material between the oxide nanoparticles of the quarter-wave coating.

14. Process according to any one of Claims 11 to 13, comprising a step (400) of depositing a top coat (16) directly on the coating that minimizes ultraviolet reflections (14).

Fig. 1

Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013092377 A
- EP 1362246 A
- EP 0614957 A